# EUROPÄISCHE PATENTANMELDUNG

(11) **EP 0 682 062 A2**
(43) Veröffentlichungstag der Anmeldung: **15.11.1995**
(21) Anmeldenummer: 95106757.8
(22) Anmeldetag: 04.05.1995
(51) Int. Cl.: C08J 7/04, B05D 5/00, B05D 7/02, A61B 19/04

(54) **Verfahren zum Aufbringen einer Gleitschicht auf flexible Gummiartikel**

(30) Priorität: 13.05.1994 AT 992/94
(71) Anmelder: Semperit Aktiengesellschaft Holding, A-1031 Wien (AT)
(72) Erfinder: Wukovnig, Siegfried, Dipl.-Ing. Dr., A-2632 Wimpassing (AT); Holzner, Armin, Dipl.-Ing. Dr., A-2630 Ternitz (AT)
(74) Vertreter: Müller, Hans-Jürgen, Dipl.-Ing.

(57) **Zusammenfassung**

Die vorliegende Erfindung beschreibt ein Verfahren zur Herstellung von flexiblen Gummiartikeln, an welchen eine neuartige Gleitschicht angebracht wird, die Schlüpfrigkeit gegenüber der menschlichen Haut gewährleistet. Diese besteht aus einem Latex, welcher aus einem Copolymeren besteht, das einen hydrophilen Anteil (als Monomerbaustein) enthält. Der hydrophile Anteil besteht vorzugsweise aus Acrylsäure bzw. Methacrylsäure oder aus Acrylaten bzw. Methacrylaten beziehungsweise einem Gemisch dieser Monomerbausteine, jedoch können auch andere stark wasseraufnehmende Polymerbausteine verwendet werden.

Ein weiterer Gegenstand der vorliegenden Erfindung ist die gleichzeitige Verwendung eines oberflächenaktiven Stoffes zur Herstellung einer erfindungsgemäßen Gleitschicht. Dadurch wird einerseits eine verbesserte Naßanziehbarkeit (z.B. bei Handschuhen) erreicht. Andererseits wird bei der Herstellung diverser Gummiartikel (z.B. Handschuhe, Kondome) durch Verwendung ausgesuchter oberflächenaktiver Tenside in der Gleitschicht ein verbesserter Infektionsschutz für den Anwender erhalten.

## Beschreibung

Die Erfindung betrifft ein Verfahren zum Aufbringen einer Gleitschicht auf flexible Gummiartikel. Die Gleitschicht soll Schlüpfrigkeit gegenüber der menschlichen Haut sowohl im nassen als auch im trockenen Zustand gewährleisten. Gummiartikel, bei welchen eine gute Gleitfähigkeit mit der menschlichen Haut erforderlich sind, existieren in großer Vielfalt.

Die meisten an der Oberfläche unbehandelten Gummiartikel weisen einen relativ großen Reibungswiderstand gegenüber menschlicher Haut auf. So sind zum Beispiel unbehandelte Gummihandschuhe kaum anzuziehen. Um das Anziehen dieser Handschuhe zu erleichtern, wird konventionellerweise Puder (z.B. Talkum, Maisstärkepuder, usw.) als Gleitmittel auf der Innenschicht des Handschuhes aufgebracht. Die Verwendung von Puder ist jedoch insbesonders im medizinischen Bereich problematisch, da Puderreste, falls sie in offene Wunden gelangen, zur Granulombildung führen können. Ein weiterer wichtiger Anwendungsbereich für puderfreie Handschuhe liegt in der Elektronikindustrie. Die konventionelle Methode, Gummiprodukte und im speziellen Handschuhe gegenüber der menschlichen Haut ohne Verwendung von Puder schlüpfrig zu machen, besteht in der Oberflächenchlorierung. Hierbei wird das Gummiprodukt mit wäßrigen chlorgashaltigen Medien behandelt und anschließend gewaschen. Dabei wird vor allem eine gute Gleitfähigkeit gegenüber der trockenen menschlichen Haut erreicht, jedoch wird durch diese Oberflächenchlorierung die Polymerstruktur künstlich gealtert und es kommt so zu einer deutlichen Verschlechterung der physikalischen und chemischen Eigenschaften des Produktes (Festigkeit, Reißdehnung, Wasserquellung, Lagerfähigkeit, etc.). Durch eine derartige Oberflächenbehandlung wird jedoch kaum eine verbesserte Naßanziehbarkeit der Handschuhe erreicht.

Eine alternative Oberflächenbehandlung stellt die Beschichtung mit Hydrogelen dar. Einige derartige Hydrogele sind schon seit langem bekannt. Dies sind z.B. Polyurethane, Polyvinylpyrrolidon, Polyhydroxyethylacrylat oder -methacrylat, Polyhydroxypropylacrylat oder methacrylate and Copolymere miteinander oder mit
Acryl- oder Methacrylsäure, Acryl- oder Methacrylester oder Vinylpyridin. Beispiele für derartige Beschichtungen sind beschrieben:
U.S. Pat. Nr. 3.813.695 beschreibt einen getauchten Gummihandschuh, der an der Innenseite mit einem Hydrogelpolymer, wie zum Beispiel Polyvinylpyrrolidon, Polyhydroxyethyl-acrylat oder -methacrylat, Polyhydroxypropyl-acrylat oder -methacrylat und Copolymere dieser untereinander oder mit Acryl- oder Methacrylsäure. Das bevorzugte Hydrogelpolymer ist ein Copolymer von 2-Hydroxyethylmethacrylat mit Methacrylsäure oder mit 2-Ethylhexylacrylat oder einem ternärem Copolymer von 2-Hydroxyethylmethacrylat, Methacrysäure und 2-Ethylhexylacrylat.

U.S. Patent 4.482.577 legt einen Prozeß für die Beschichtung eines flexiblen vulkanisierten Operationshandschuhs mit einem hydrophilen Polymer offen, wodurch die Aufbringung von Puder an der Handschuhinnenseite unterlassen werden kann. Das hierbei verwendete Copolymer besteht aus einer Mischung von 2-Hydroxyethylmethacrylat und 2-Ethylhexylacrylat.

U.S. Patent 4.100.309 legt die Aufbringung einer gleitfähigen Schicht aus einem Polyurethan-Polyvinylpyrrolidon-Komplex offen.

Üblicherweise wird bei diesen Produkten bzw. Verfahren das Hydropolymer gemeinsam mit einem Härtungsmittel aus einer Lösung auf das Produkt aufgebracht, anschließend das Lösungsmittel durch Trocknung entfernt, wobei die Polymerschicht ausgehärtet und so eine Hydrogelschicht ausgebildet wird. Hierbei werden oft organische Lösungsmittel und gesundheitlich nicht unbedenkliche monomere oder oligomere Vernetzungsmittel verwendet.

Die vorliegende Erfindung beschreibt die Herstellung von einer neuen Gleitschicht, die aus einem Copolymeren besteht, das einen hydrophilen Anteil (als Monomerbaustein) enthält. Der hydrophile Anteil besteht vorzugsweise aus Acrylsäure bzw. Methacrylsäure oder aus Acrylaten bzw. Methacrylaten beziehungsweise einem Gemisch dieser Monomerbausteine, jedoch können auch andere stark wasseraufnehmende Polymerbausteine verwendet werden.

Im Unterschied zum heutigen Stand der Technik wird in der vorliegenden Erfindung diese Gleitschicht nicht durch Auftragen einer mit einem Härter versetzten Polymer- oder Monomerlösung hergestellt, sondern das Verfahren zeichnet sich dadurch aus, daß die polymere Gleitschicht in Form eines Copolymerlatex aufgebracht wird. So entfällt die Härtung bzw. Vernetzung nach dem Tauchprozeß. Die aus dem erfindungsgemäßen Copolymerlatex bestehende Gleitschicht wird durch Koagulation der aus des erfindungsgemäßen Latex durch mehrwertige Metallionen, durch wärmesensible Koagulantien oder nur durch Auftrocknen auf der Form oder den erfindungsgemäßen Gummiartikel hergestellt. Diese Koagulantien können entweder in einem unmittelbar vorangehenden Tauchschritt aufgetragen werden oder im Falle der Koagulation durch mehrwertige Metallionen durch Diffusion durch die erste Trägerschicht an der Oberfläche dieser Trägerschicht verfügbar gemacht werden. Diese Art der Aufbringung einer Gleitschicht unterscheidet sich von den bisher bekannten Verfahren, die die polymere Gleitschicht aus einer Lösung aufbringen und anschließend mit einem System aus Harzen vernetzen. Dabei verwendete Harzsysteme sind zum Beispiel Melamin-Formaldehydharze, deren Anteil an monomeren Formaldehyd eine Anwendung im medizinischen Bereich nicht erstrebenswert erscheinen läßt.

Ein weiterer Gegenstand der vorliegenden Erfindung ist die gleichzeitige Verwendung eines oberflächenaktiven Stoffes zur Herstellung einer erfindungsgemäßen Gleitschicht. Dadurch wird eine verbesserte Naßanziehbarkeit des Handschuhes erreicht. Als oberflächenaktive Stoffe können sowohl anionische, kationische als auch nichtionogene Tenside verwendet werden. Bevorzugt werden kationische Tenside oder Siloxane verwendet, die entweder in einem nachfolgenden Verfahrensschritt oder gleichzeitig mit der polymeren Gleitschicht aufgebracht werden.

Vorzugsweise beschäftigt sich die Erfindung mit der Herstellung von Artikel die durch Tauchen einer Form in eine Latexmischung erhalten werden, wobei die Latexmischung sowohl auf Naturlatex als auch auf Syntheselatex basieren kann. Die verwendeten Latexmischungen können sowohl unvernetzt als auch im vorvernetzten Zustand vorliegen. Im Falle einer unvernetzten oder nur partiell vorvernetzten Latextauchmischung muß die erhaltene Gummischicht noch an der Tauchform vulkanisiert werden.

Vorzugsweise werden Latextauchmischungen verwendet, die vernetzte oder partiell vorvernetzte Polymere enthalten. Dieser Latex wird auf die Tauchform, welche die Gestalt des Endproduktes vorgibt, aufgebracht und koaguliert und erzeugt so eine dünne Schicht aus elastischem, relativ resistentem Gummimaterial. Die Latextauchmischung enthält die üblichen Compoundierungszutaten, wie beispielsweise Schwefel, Zinkoxid, organische Beschleuniger (u.a. Zinksalze von Dithiocarbamaten, Thiurame, Thioharnstoff, etc.), Stabilisatoren, Wachse, Alterungsschutzmittel, Viskositätsregler, Füllstoffe und Farben. Es kann sowohl Naturkautschuk- als auch Synthesekautschuklatex, der zur Verwendung in Tauchverfahren geeignet ist, verwendet werden. Von den natürlichen und synthetischen Latices werden vorzugsweise Naturkautschuk, Polychloropren, synthetisches Polyisopren, Nitrilbutadien- und Styrolbutadienkautschuk bzw. eine Mischung dieser Polymere verwendet. Rezepturen zur Verarbeitung solcher Latices sind bekannt. Personen die in der Kunst der Herstellung derartiger Artikel bewandert sind, können Rezepturen, Bedingungen für die Vernetzung derartiger Latices und Tauchprozeßparameter den speziellen Anforderungen des Endproduktes anpassen.

Nach der vorliegenden Erfindung werden die flexiblen Gummiartikel an ihren Oberflächen oder Teilen ihrer Oberflächen mit einer Gleitschicht, welche keine staub- oder puderförmigen Teilchen enthält, versehen. Diese Gleitschicht ist notwendig, um Schlüpfrigkeit gegenüber der menschlichen Haut zu erreichen. Dadurch wird einerseits die Anziehbarkeit vieler Produkte gewährleistet (z.B. eng anliegende Handschuhe). Des weiteren ist eine gute Schlüpfrigkeit gegenüber menschlichem Gewebe ein wesentliches Funktionsmerkmal einiger spezieller Artikel (z.B. Katheder).

Im speziellen Fall der Herstellung von Tauchartikel wird die Oberfläche der Produkte üblicherweise in zwei Bereiche unterteilt: Die Tauchformseite, welche in ihrer Rauheit der Morphologie der Form entspricht und die Tauchbadseite, welche sich während des Tauchvorganges außen befindet. Diese ist üblicherweise glatt und gelangt beim Abziehen des dünnwandigen Gummiproduktes von der Form üblicherweise an die Innenseite des Produktes (z.B. Handschuhinnenseite). Oft müssen beide Seiten des Produktes beim Herstellungsprozeß mit Gleit- bzw. Trennmittel behandelt werden, um ein Zusammenkleben zu vermeiden und (im Fall von Handschuhen, etc.) ein reibungsloses Anziehen zu gewährleisten. In der vorliegenden Erfindung wird eine im nachfolgenden definierte Gleitschicht wahlweise tauchformseitig, tauchbadseitig oder auf beiden Seiten der erfindungsgemäßen Tauchprodukte aufgetragen.

Das erfindungsgemäße Beschichtungsverfahren verwendet Copolymere, welche stark hydrophile Polymeranteile enthalten. Diese hydrophilen Anteile bestehen vorzugsweise aus Acrylsäure bzw. Methacrylsäure, aus Acrylaten bzw. Methacrylaten, beziehungsweise aus einem Gemisch dieser Monomerbausteine des Polymers, wobei auch andere stark hydrophile Polymerbausteine, wie z.B. Vinylessigsäure oder Vinylpyrollidon, gut geeignet sind. Zusätzlich können auch hydrophobe oder im Vergleich weniger wasseraufnehmende Anteile im Copolymer vorhanden sein, vorzugsweise Styrol-, Butadien-, Isopren- und/oder Acrylnitrilmonomere. Das erfindungsgemäße Copolymer liegt zur Verarbeitung in Form eines Copolymerlatex vor und wird nach Auftragung auf das Produkt oder die Tauchform koaguliert. Der erfindungsgemäße Copolymerlatex wird vorzugsweise durch Sprühen, Tauchen, Streichen oder andere geeignete Verfahren auf die Oberfläche des Gummiartikels oder die Tauchform gebracht.

Um eine in manchen Fällen auftretende Ablösung der Gleitschicht von der Oberfläche des erfindungsgemäßen Gummiartikels zu vermeiden, wird diese an der Oberfläche des Artikels mittels eines geeigneten Koagulationsverfahren gebunden. Die Koagulation kann sowohl durch Trocknung, durch Zugabe von wärmesensibilisierenden Substanzen oder auch durch andere Koagulantien (z.B. Salze mehrwertiger Kationen, Säuren, u.a.) herbeigeführt werden. Die angeführten chemischen Koagulantien können entweder direkt dem erfindungsgemäßen Copolymerlatex vor der Auftragung zugegeben werden, es kann das Produkt bzw. die Tauchform unmittelbar vor Aufbringung der Gleitschicht mit dem Koagulant vorbehandelt werden oder es können Reste der für die Koagulation des Gummifilms verwendeten Substanzen an die Oberfläche diffundieren und mit dem für die Gleitschicht verwendeten Copolymerlatex reagieren. Umgekehrt ist eine Bindung einer formseitig aufgebrachten Gleitschicht durch Reaktion der produktbildenden Latexschicht mit überschüssigem Koagulant, welches aus der Gleitschicht herrührt, möglich.

Ein weiterer Teil der vorliegenden Erfindung betrifft die Anwendung von oberflächenaktiven Substanzen und/oder Siloxanen in oder auf der erfindungsgemäßen Gleitschicht. Abhängig vom Polymertyp des Produktes und der Gleitschicht, der Dicke und dem verwendeten Koagulant in der Gleitschicht und den erforderlichen Gleiteigenschaften des Produktes ist es, insbesondere zur Erhöhung der Naßgleitfähigkeit, manchmal vorteilhaft, oberflächenaktive Substanzen in die erfindungsgemäße Gleitschicht einzubringen. Hierbei können sowohl anionische, kationische als auch nichtionogene Tenside, aber auch Siloxane verwendet werden. Besonders gute Verbesserungen der Gleitfähigkeit werden hierbei oft durch zusätzliche Aufbringung von Tensiden aus der Gruppe der höherwertigen Amine oder von Siloxanen erreicht. Hier können z.B. quarternäre Amintypen zur Anwendung gelangen, welche nicht nur die Gleitfähigkeit der Handschuhe verbessern, sondern auch gut hautverträglich sind und bakterizide und fungizide Eigenschaften aufweisen. So ergibt sich für den Anwender im medizinischen Bereich nicht nur ein Produkt mit idealen Gleiteigenschaften, sondern auch mit einem verbesserten Infektionsschutz. Die erfindungsgemäßen Tenside können sowohl vor, nach oder gleichzeitig mit der Aufbringung des die Gleitschicht bildenden Copolymerlatex auf den Gummiartikel aufgetragen werden.

Nähere Beschreibung des Copolymeren der Gleitschicht:
Die Gleitschicht ist dadurch gekennzeichnet, daß sie aus einem Copolymeren besteht, welches einen hydrophilen Anteil enthält (unter dem Begriff Copolymeren wird nicht nur ein Gemisch aus zwei Monomerbausteinen, sondern ein Gemisch aus bis zu fünf Monomerbausteinen verstanden). Dieser hydrophile Anteil enthält vorzugsweise Methacryl- bzw. Acrylsäure, und/oder deren Kondensationsprodukte mit ein- beziehungsweise mehrwertigen Alkoholen.

Beispielsweise umfaßt die Alkoholfunktion dieser Ester Alkylgruppen (Methyl-, Propyl-, Butyl-, usw.), Hydroxyalkyle (2-Hydroxyethyl-, 2-Hydroxypropyl-, 3-Hydroxypropyl-, usw.), substituierte Alkylgruppen, monomere und polymere höherwertige Alkohole (Sorbitan, Ethylenglykol, Propylenglykol, etc. und deren Oligomere und Polymere).

Der hydrophile Anteil des Copolymeren kann aber auch Vinylalkohol und/oder Vinylessigsäure und/oder deren Ester und/oder Vinylpyrollidon bzw. Copolymere dieser drei Monomerbausteine oder andere ähnlich stark hydrophile Bestandteile enthalten.

Des Weiteren kann ein hydrophober bzw. weniger wasseraufnehmender Polymeranteil vorhanden sein. Dieser besteht vorzugsweise aus Polystyrol bzw. Polybutadien bzw. Polyisopren bzw. Acrylnitril bzw. einem Copolymeren von Styrol und Butadien bzw. Styrol und Isopren bzw. Acrylnitril und Butadien.

### Beispiele zum erfindungsgemäßen Herstellverfahren flexibler Gummiartikel:

### Beispiel 1:

Zur Herstellung von Latexhandschuhen werden die verwendeten Tauchformen aus Kunststoff oder Porzellan vor dem Tauchprozeß gereinigt und getrocknet. Danach wird in eine Koagulationslösung, welche Kalziumnitrat, Polyethylenglykol (MG ca. 6000) und einen wasserlöslichen Silikontyp enthält, getaucht und kurz mit Heißluft getrocknet. Anschließend werden die Formen zur Aufbringung des Handschuhs in die mittels Schwefelvulkanisation nach Stand der Technik vorvernetzte Naturlatexmischung getaucht. Nach neuerlicher kurzer Trocknung mit Heißluft bei etwa 90°C wird in ein Tauchbad, welches einen vorvernetzten Acrylat-Copolymerlatex (z.B. Hycar 26083, Firma BFGoodrich) mit 20% Trockengehalt zur Auftragung der Gleitschicht getaucht, wobei es zu einer Bindung der der Gleitschicht an den Naturlatexfilm durch Koagulation mit unreagierten Kalziumresten an der Oberfläche des Handschuhs kommt. Nach neuerlicher kurzer Heißlufttrocknung wird mit Heißwasser gewaschen, danach 20 Minuten bei 120°C fertiggetrocknet und vulkanisiert. Zu Ende des Herstellprozesses wird der Handschuh noch mit Silikonemulsion besprüht, von der Form abgezogen (wobei die aufgetragene Gleitschicht an die Handschuhinnenseite gelangt) und nachgetrocknet.

### Beispiel 2:

Es wird Beispiel 1 wiederholt, mit dem Unterschied, daß durch die Wahl unterschiedlicher Tauchformen Gummifingerlinge hergestellt werden.

### Beispiel 3:

Es wird Beispiel 1 wiederholt, mit dem Unterschied, daß vorvernetzter Chloroprenlatex (Neoprene Latex 750, Firma Du Pont) für die Handschuhherstellung verwendet wird.

### Beispiel 4:

Es wird Beispiel 1 wiederholt, mit dem Unterschied, daß am Ende des Herstellungsprozesses statt der Silikonemulsion ein Polyglykol-Polyamin-Kondensationsharz aufgetragen wird.

### Beispiel 5:

Es wird Beispiel 1 wiederholt, mit dem Unterschied, daß am Ende des Herstellungsprozesses statt der Silikonemulsionsbehandlung des Handschuhs in ein Tauchbad mit 2% Lauryltrimethylammoniumchlorid (Dehyquart LT, Firma Henkel) getaucht wird. Danach folgt kurze Trocknung des Handschuhes mit Heißluft an der Form und Abziehen des fertigen Produktes. Neben guter Anziehbarkeit des Handschuhes mit nassen und trockenen Händen wird durch die bakteriziden Eigenschaften des quarternären Amins ein zusätzlicher Schutz gegen Infektionen für den Anwender erreicht.

### Beispiel 6:

Es wird Beispiel 1 wiederholt, mit dem Unterschied, daß unter Erhalt vergleichbarer Eigenschaften des Endproduktes statt dem Acrylat-Copolymerlatex ein Acrylsäureester-Acrylnitril-Copolymerlatex eingesetzt wird.

### Beispiel 7:

Dünnwandige Latexhandschuhe werden entsprechend dem Stand der Technik durch Tauchen von Porzellanformen in eine Naturlatexmischung hergestellt. Nach Aufbringung der Latexschicht werden die Handschuhe 5 Minuten bei 85°C mit Wasser ausgewaschen. Anschließend wird kurz in ein Tauchbad mit einer Temperatur von 30°C und folgender Zusammensetzung getaucht:
- Rhoplex AC-33 (Acrylsäurehaltiger Latex, Trockengehalt = 46%, Firma Rohm&Haas): 20,7 Teile
- Coagulant AW (Organopolysiloxan, Firma Bayer) = 0,1 Teile
- Marlamid AS18 (Stearinsäure-Alkanolamin-Kondensationsprodukt, Firma Hüls) = 5 Teile
- Essigsäure 98% = 0,2 Teile
- Wasser = 74 Teile

Danach wird der Handschuh 25 Minuten in einem Heißluftofen bei 120°C getrocknet und vulkansiert. Schließlich wird der fertige Handschuh von der Form abgezogen.

### Beispiel 8:

Es wird Beispiel 7 wiederholt, mit dem Unterschied, daß statt Rhoplex AC-33 ein mittels Schwefelvulkanisation vorvernetzter carboxylierter Acrylnitril-Butadienlatex, welcher mittels Schwefelvulkanisation vorvernetzt wurde, im aliquoten Anteil (bezogen auf Trockensubstanz) verwendet wird.

### Beispiel 9:

Es wird Beispiel 7 wiederholt, mit dem Unterschied, daß durch Auswahl unterschiedlicher Tauchformen, Vortauchbad- und Naturlatextauchbadrezepturen entsprechend dem Stand der Technik Kondome hergestellt werden.

### Beispiel 10:

Es wird Beispiel 7 wiederholt, mit dem Unterschied, daß zur Herstellung des Handschuhes im Tauchverfahren Chloroprenlatexmischung verwendet wird.

### Beispiel 11:

Dünnwandige Latexhandschuhe werden durch Tauchen von
Porzellanformen in eine Naturlatexmischung hergestellt. Nach Aufbringung der Latexschicht werden die Handschuhe 5 Minuten bei 85°C mit Wasser ausgewaschen. Anschließend wird in ein Tauchbad mit verdünnter Salzsäure, danach in ein Bad mit Styrol-Acrylat-Copolymerlatex (Acralen ATR, Firma Bayer, ursprünglicher Trockengehalt = 48%) mit 15% Trockensubstanz getaucht und nochmals mit Heißwasser gewaschen. Danach wird der Handschuh 25 Minuten in einem Heißluftofen bei 120°C getrocknet und vulkanisiert. Schließlich wird der fertige Handschuh von der Form abgezogen, mit Silikonemulsion behandelt und nachgetrocknet.

### Beispiel 12:

Es wird ein Naturlatexhandschuh hergestellt, welcher auf beiden Seiten mit der erfindungsgemäßen Gleitschicht versehen ist. Dazu werden die Formen nach vorhergehender Reinigung und Vorwärmung in ein Tauchbad mit folgender Rezeptur getaucht:
- Acralen ATR (Trockengehalt = 48%): 41,2 Teile
- Coagulant AW (Organopolysiloxan, Firma Bayer) = 0,2 Teile
- Marlamid AS18 (Stearinsäure-Alkanolamin-Kondensationsprodukt, Firma Hüls) = 2,5 Teile
- Essigsäure 98% = 0,1 Teile
- Wasser = 56 Teile

Anschließend wird mit Heißluft zwischengetrocknet und in eine partiell vorvernetzte Naturlatextauchmischung mit einem Feststoffgehalt von 50%, welche ebenfalls mittels einem Organopolysiloxan wärmesensibilisiert wurde, getaucht. Hierbei bildet sich der erwünschte Naturlatexhandschuh, welcher analog zu Beispiel 7 sodann an der Tauchbadseite mit einer erfindungsgemäßen Gleitschicht versehen wird. Die Vulkanisation erfolgt in einem Heißluftofen über 30 Minuten bei 120°C. Anschließend wird der Handschuh abgekühlt und von der Form abgezogen. Das Produkt weist die erfindungsgemäße Gleitschicht mit den bereits beschriebenen Eigenschaften an beiden Seiten des Handschuhs auf.

## Patentansprüche

1. Verfahren zur Aufbringung einer Gleitschicht auf flexible Gummiartikel,
**dadurch gekennzeichnet**,
daß ein Copolymerlatex mit einem stark hydrophilen Polymeranteil auf den Gummiartikel oder dessen Vorläufer aufgetragen wird.

2. Verfahren nach Anspruch 1,
**dadurch gekennzeichnet**,
daß ein Copolymerlatex mit einem im Copolymerlatex polymer gebundenen hydrophilen Polymeranteil in Form von Acryl- bzw. Metacrylsäure, Acrylate und/oder Metacrylate, Vinylpyridin, Vinylpyrollidon, Vinylacetat, Vinylalkohol und/oder ähnliche hygroskopische chemische Verbindungen, Glykole, Amine und/oder Ester angewendet wird.

3. Verfahren nach Anspruch 1 oder 2,
**dadurch gekennzeichnet**,
daß ein Copolymerlatex mit einem hydrophoben bzw. weniger wasseraufnehmenden Anteil verwendet wird.

4. Verfahren nach Anspruch 3,
**dadurch gekennzeichnet**,
daß als hydrophober bzw. weniger wasseraufnehmender Polymeranteil im Copolymerlatex polymer gebundenes Styrol, Butadien, Acrylnitril und/oder Isopren verwendet wird.

5. Verfahren nach einem der vorhergehenden Ansprüche,
**dadurch gekennzeichnet**,
daß der Copolymerlatex im Streich-, Tauch- oder Sprühverfahren aufgebracht und auf dem Gummiartikel oder dessen Vorläufer zum Koagulieren gebracht wird.

6. Verfahren nach Anspruch 5,
**dadurch gekennzeichnet**,
daß der Copolymerlatex mittels mehrwertigen Kationen, Säuren, wärmesensibilisierenden Substanzen, Wärmeeinwirkung und/oder Trocknung koaguliert wird.

7. Verfahren nach einem der vorhergehenden Ansprüche,
**dadurch gekennzeichnet**,
daß eine oder mehrere oberflächenaktive Substanzen mit oder zusätzlich zu dem Copolymerlatex aufgebracht wird.

8. Verfahren nach Anspruch 7,
**dadurch gekennzeichnet**,
daß als oberflächenaktive Substanzen Silikone, langkettige Fettsäureamine, sekundäre und/oder tertiäre Amine, quartäre Amine mit bakteriziden und/oder mit wachstumshemmenden Eigenschaften, Salze von organischen Säuren und/oder Kondensationsprodukte von organischen Säuren oder Alkoholen mit mehrwertigen Alkoholen verwendet werden.

9. Verfahren zur Herstellung von flexiblen Gummiartikeln im Tauchverfahren unter Verwendung von Latex,
**gekennzeichnet durch**
folgenden Verfahrensablauf:
- Formung des Gummiartikels durch Tauchung einer Form in das Latexmischungsbad, gegebenenfalls nach vorhergehender Formenreinigung
- Aufbringung eines Copolymerlatex
- Abziehen des Produkts von der Tauchform

10. Verfahren nach Anspruch 9,
**gekennzeichnet durch**
folgende weitere Verfahrensschritte:
- Vortauchen der Form in Koagulationsmittel
- Waschen der getauchten Form mit Heißwasser
- Nachbehandlung mit einem Tensid und/oder Silikon nach dem Vulkanisieren.

11. Verfahren nach Anspruch 9 oder 10,
**gekennzeichnet durch**
folgenden Verfahrensablauf:
- Aufbringung eines Copolymerlatex in eine Form
- Formung des Gummiartikels durch Tauchen einer Form in das Latexmischungsbad
- Zwischentrocknen
- Waschen mit Heißwasser
- Aufbringung des Copolymerlatex auf das zwischengetrocknete Zwischenprodukt
- Fertigtrocknen und Vulkanisieren und
- Abziehen des Fertigprodukts von der Tauchform sowie gegebenenfalls Nachbehandeln mit einem Tensid oder Silikon.
